# EUROPÄISCHE PATENTSCHRIFT

(11) **EP 0 622 176 B1**
(45) Veröffentlichungstag und Bekanntmachung des Hinweises auf die Patenterteilung: **01.07.1998**
(21) Anmeldenummer: 94106275.4
(22) Anmeldetag: 22.04.1994
(51) Int. Cl.: B32B 5/24, B32B 27/32, B60R 13/01, G10K 11/16

(54) **Geformter Schichtkörper, insbesondere Innenauskleidungsteil für Kraftfahrzeuge, sowie Verfahren und Vorrichtung zu seiner Herstellung**
Moulded multilayered product, in particular an internal liner for vehicles, and method and apparatus for its production
Product stratifié moulé, notamment revêtement intérieur de véhicule et procédé et appareil pour sa fabrication

(30) Priorität: 28.04.1993 DE 4313911
(43) Veröffentlichungstag der Anmeldung: 02.11.1994
(73) Patentinhaber: MAGNA GEORG NÄHER GmbH, 71706 Markgröningen (DE)
(72) Erfinder: Stricker, Klaus, D-74321 Bietigheim Bissingen (DE); Maysenhölder, Rolf, D-74354 Besigheim (DE); Hess, Dieter, Troy, Mi. 48083 (US)
(74) Vertreter: Patentanwälte Ruff, Beier, Schöndorf und Mütschele

(56) Entgegenhaltungen:
- EP-A- 0 403 187
- EP-A- 0 453 877
- DE-A- 2 706 446
- DE-U- 8 909 952

## Beschreibung

Die Erfindung betrifft ein Innenauskleidungsteil für Kraftfahrzeuge in Form eines geformten Schichtkörpers, mit einer Trägerschicht aus einer im wesentlichen steifen extrudierten Folie aus Polypropylen und mindestens einem Oberflächenbelag aus einem textilen Flächengebilde sowie ein verfahren und eine Vorrichtung zu seiner Herstellung.

Innenauskleidungsteile für Kraftfahrzeuge bestehen häufig aus einem Schichtkörper, der entsprechend den Wandungen des Innenraumes geformt ist und an seiner dem Innenraum zugewandten Seite einen textilen Belag, insbesondere in Form eines Nadelvlieses, aufweist. Zur Herstellung solcher Innenauskleidungsteile werden thermoplastische Kunststoffe, insbesondere Polypropylen, zu Folien extrudiert, wobei auf die heiße Folie der textile Belag unmittelbar aufkaschiert wird, wobei die Fasern des Nadelvlieses in die noch weiche Masse der Folie eingedrückt und in diese eingebettet werden. Hierbei ist es üblich, daß das als Oberflächenbelag dienende Nadelvlies aus einem Material besteht, daß bei der Extrusionstemperatur, die bei Polypropylen in der Höhe von ca 240 °C liegt, nicht schmilzt, da dies sonst mit einer Zerstörung der Struktur des Nadelvlieses verbunden ist. Im Deutschen Gebrauchsmuster G 89 09 952.4 U1 ist ein textiles Ausstattungsteil für Kraftfahrzeuge beschrieben. Als Träger für einen Polyvliesbelag aus Polypropylen ist jeweils ein Schaumstoff vorgesehen. Der Schaumstoff besteht aus Polyethylen, das einen niedrigeren Schmelzpunkt besitzt als das Polypropylen des Polyvliesbelages. So ist es möglich, den Schaumstoff auf den Polyvliesbelag aufzukaschieren, ohne daß der Polyvliesbelag durch erhöhte Temperatur beschädigt wird.

Es wurde auch schon versucht, Nadelvliese aus Polypropylen auf extrudierte Polypropylenfolien aufzukaschieren, wodurch eine Schweißverbindung zwischen Folie und Vlies erhalten wird, die allerdings zu einer weitgehenden Strukturveränderung des Vlieses führt, weil die Fasern stark angeschmolzen werden und an Festigkeit verlieren.

Der Erfindung liegt die Aufgabe zugrunde, ein Innenauskleidungsteil für Kraftfahrzeuge und dessen Herstellung zu verbessern, insbesondere einen umweltfreundlichen Aufbau eines qualitativ hochwertigen Schichtkörpers zu ermöglichen und die Gestaltungsmöglichkeiten bei seiner Herstellung zu erweitern.

Die Erfindung ist dadurch gekennzeichnet, daß Fasern von mindestens einem Oberflächenbelag mindestens teilweise aus einem im wesentlichen artgleichen thermoplastischen Kunststoff bestehen wie die Folie und der Oberflächenbelag durch thermische Verklebung dieser Fasern mit der Folie verbunden ist, und daß mindestens eine Seite der Folie vollflächig mit einer offenporigen Schicht aus einem dünnen als Trägerbahn dienenden Bahnmaterial belegt ist, das der Folie und dem mindestens einen textilen Oberflächenbelag entsprechend geformt ist.

Im Gegensatz zur bloßen Einbettung von Fasern aus unschmelzbarem Material oder thermoplastischen Kunststoffen, deren Erweichungsbereich oberhalb der Extrusionstemperatur der Folie liegt, ist es erfindungsgemäß vorgesehen, die Verbindung zwischen dem textilen Oberflächenbelag und der Folie als Verklebung auszubilden, bei der Fasermaterial des textilen Oberflächenbelages mit dem thermoplastischen Kunststoff der Folie über gemeinsame Grenzflächen haftend verbunden ist. Hierdurch wird eine gute Verbindung erhalten, ohne daß irgendwelche zusätzlichen Klebemittel erforderlich sind.

Während sich bei der oben erwähnten Schweißverbindung die Phasengrenzen zwischen Folienmaterial und Belagmaterial auflösen und die Fasern des textilen Belags im foliennahen Bereich des Belages beim Schmelzen zerfließen, bleiben bei der erfindungsgemäßen Verklebung die Phasengrenzen zwischen Folienmaterial und Fasermaterial weitgehend erhalten. Die Fasern sind im foliennahen Bereich verformt und miteinander versintert. Die Faserstruktur ist im versinterten Bereich verdichtet, wobei ein Faserverbund gebildet wird, der mit der Folienoberfläche, ggf. unter Ausbildung von Eindrückungen bzw. Vertiefungen in der Folienoberfläche, verklebt ist. Der Faserquerschnitt und die Grenzflächen der Fasern sind auch im foliennahen Bereich weitgehend erhalten. Unmittelbar daneben ist die Struktur des textilen Belages unverändert, d.h. in der ursprünglichen Form geblieben.

Die Dicke des verdichteten bzw. versinterten Bereiches der Fasern entspricht etwa dem 1 bis 10-fachen, insbesondere etwa 1 bis 5-fachen der Faserstärke. Zwischen einzelnen Verklebungsstellen befinden sich freie Oberflächenbezirke der Folie.

Unter artgleichen thermoplastischen Kunststoffen werden solche Kunststoffe verstanden, die gleich oder im wesentlichen gleich sind wie die Kunststoffe der Folie oder verschieden davon sind, aber bei denen der Erweichungs- und Klebrigkeitsbereich bei etwa demselben Temperaturniveau liegt, so daß sie thermisch miteinander verklebt werden können und beim Recycling eine gemeinsame Schmelze zu bilden vermögen. Der textile Oberflächenbelag ist an sich bekannter Weise vorzugsweise ein Faservlies, wobei solche Vliese bevorzugt sind, die frei von einem textilen Träger sind. Der Schichtkörper ist in der Regel ein dreidimensional geformter Schichtkörper, der aus der ursprünglichen Ebene der Folie durch Umformen derselben seine dreidimensionale Struktur erhalten hat. Der Schichtkörper ist vorzugsweise eine Kofferraum-Innenauskleidung. Der Oberflächenbelag ist zweckmäßigerweise als Oberflächendekor ausgebildet. Gemäß einer bevorzugten Ausführungsform der Erfindung weist der Schichtkörper auf beiden Seiten, d.h. zwei, Oberflächenbeläge auf, wobei einer als Dekorschicht und einer als Rückenbeschichtung dienen kann. Ein Oberflächenbelag kann als Rückebeschichtung ausgebildet sein, die zur Schalldämpfung dient. Der zweite Oberflächenbelag bzw. die Rückenbeschichtung wird vorzugweise ebenfalls von einem Faservlies, insbesondere einen Nadelvlies gebildet.

Das thermoplastische Material der Folie ist an sich bekannter Weise Polypropylen. Polypropylen besitzt zufriedenstellende mechanische Eigenschaften und eignet sich für eine Wiederverwertung. Vorzugsweise besteht mindestens ein Oberflächenbelag, insbesondere die Dekorschicht vollständig aus im wesentlichen dem gleichen Material wie die Folie. Gemäß Erfindung ist es bevorzugt, den Schichtkörper sortenrein aufzubauen oder zumindest aus solchen Materialien zusammenzusetzen, die gemeinsam recycelbar sind. Eine Trägerfolie aus Polypropylen und mindestens ein Oberflächenbelag aus Polypropylenfasern stellen einen derartigen sortenreinen Aufbau dar.

Es ist, wenn gewünscht, auch möglich, daß mindestens ein Oberflächenbelag, insbesondere eine Rückenschicht, zum Teil, insbesondere zum überwiegenden Teil, aus Fasern besteht, die mit dem Material der Folie nicht verklebbar sind, wobei der Belag zur Ausbildung der Klebeverbindung einen Anteil an Fasern aufweist, die zur Verschmelzung mit dem thermoplastischen Kunststoff der Folie geeignet sind. Ein solcher Oberflächenbelag kann beispielsweise ein Nadelvlies sein, das aus Abfällen der Textilindustrie hergestellt ist, insbesondere unter Verwendung von Baumwoll- und/oder Acrylfasern. In dem Faservlies ist ein Mindestanteil an Fasern aus einem Kunststoff vorgesehen, der mit dem Material der Folie thermisch verklebbar ist, wobei der Verbund zwischen dem Faservlies und der Folie durch Verklebung dieser Fasern mit der Folie erhalten ist. Der Gehalt an Fasern aus einem Material, das mit dem Material der Folie thermisch verklebbar ist, liegt in der Regel bei mindestens 10 Gew. %, vorzugsweise ca. 20 Gew. % oder mehr. Dabei ist der Anteil an diesen Fasern vorzugsweise gleichmäßig im Faservlies verteilt. Es ist auch möglich, den Anteil der mit der Folie verklebbaren Fasern an der der Folie zugewandten Seite des Faservlieses anzureichern. In solchen Fällen reichen bereits Gewichtsanteile an Fasern aus dem mit der Folie verklebbaren Material im Bereich von ca. 5 % aus.

Insbesondere bei der Ausbildung der Schichtkörper als Kofferraum-Innenauskleidung ist deren Herstellung mit einem hohen Anteil an Abfällen verbunden, die durch den jeweiligen Zuschnitt bedingt sind. Dabei kann der Abfallanteil in der Größenordnung von 50 % liegen. Erfindungsgemäß ist es vorgesehen, diesen Abfall bereits bei der Herstellung der Schichtkörper zu recyceln. Es ist daher besonders bevorzugt, wenn der Schichtkörper sortenrein aufgebaut ist oder zumindest aus solchen Materialien besteht, die eine gemeinsame Schmelze zu bilden vermögen, da es dann besonders einfach ist, die Abfälle zu zerkleinern und in den Extruder zur Herstellung der Folie zurückzuführen. Überraschenderweise hat sich herausgestellt, daß ein begrenzter Anteil an Fremdfasern, die bei Aufschmelztemperatur des Folienmaterials nicht in geschmolzenem Zustand vorliegen, nicht stört. Bei entsprechender feiner Zerkleinerung dieses Faseranteils beim Zerkleinern der Abfälle kann dieser Faseranteil im Extruder mitverarbeitet werden und wirkt als Faserverstärkung für die Folie. Größere Mengen an Fremdfasern werden vor dem Recyclen vorzugsweise von der Folie entfernt.

Gemäß der Erfindung ist mindestens eine Seite der Folie vollflächig mit einer offenporigen Schicht aus einem dünnen Bahnmaterial belegt, das der Folie und dem mindestens einem Oberflächenbelag entsprechend geformt ist. Dabei sind die Poren des Bahnmaterials vorzugsweise so weit und die Schichtdicke des Bahnmaterials so dünn, daß die Klebeverbindung zwischen Folie und Oberflächenbelag die Poren durchdringt. Dadurch wird erreicht, daß das Bahnmaterial, auf dessen Bedeutung später noch eingegangen wird, den Verbund zwischen Oberflächenbelag und Folie nicht beeinträchtigt, wenn sich die Schicht aus dem Bahnmaterial zwischen Oberflächenbelag und Folie befindet. Das Bahnmaterial liegt vorzugweise als sehr dünnes Faservlies in Form eines Fasergeleges vor, bei dem die Fasern in der Ebene des Bahnmaterials liegen. Das Bahnmaterial ist vorzugweise ein Spinnvlies. Das Schichtgewicht des Bahnmaterials ist sehr gering. Es liegt in der Regel zwischen 10 und 50 g/m² insbesondere bei ca. 30 g/m². Gemäß einer Ausführungsform der Erfindung wird das Bahmaterial von einer verlorenen Trägerbahn gebildet, die im Schichtkörper verbleibt.

Bei einer bevorzugten Ausführungsform der Erfindung ist die Trägerfolie mindestens bereichsweise mit Perforationen versehen. Diese Perforationen dienen vorzugsweise der Schallabsorption und können gleichzeitig zu Belüftungszwecken vorgesehen sein. Mindestens ein Oberflächenbelag, insbesondere eine sichtbare Dekorschicht ist dabei mit Vorteil frei von Perforationen, d.h. sie überdeckt die Perforationen der Folie, so daß diese von außen nicht sichtbar sind. Sind Oberflächenbeläge auf beiden Seiten der Folie vorgesehen, dann sind vorzugsweise beide Oberflächenbeläge frei von solchen Perforationen. Mindestens ein Teil der Perforationen kann in Abhängigkeit von der Verformung der Folie deformiert sein. Dies ist dann der Fall, wenn die Flächenbereiche, in denen sich die Perforationen befinden, an solchen Stellen vorgesehen sind, die bei der Formung der Folie, insbesondere durch ein später noch beschriebenes Tiefziehverfahren, gestreckt worden sind. Die perforierten Flächenbereiche sind mit Vorteil auf solche Stellen des Schichtkörpers begrenzt, die zur Abdeckung schallarmer Räume eines Kraftfahrzeuges dienen. Auf diese Weise wird erreicht, daß der zu vernichtende Schall durch die Perforationen in die dahinterliegenden schallarmen Räume eindringt und dadurch absorbiert wird. Die Perforationen können eine Querschnittsfläche von 0,5 - 5 mm² aufweisen. Der Lochanteil der Perforationen, bezogen auf die Fläche der perforierten Bereiche, kann in der Größenordnung von 0,3 - 8 %, insbesondere 1 - 6 % liegen. Die einzelnen Perforationen können beliebige Form haben, sind jedoch vorzugsweise kreisrund ausgebildet. Ihr Innendurchmesser kann im Bereich von 1 - 3 mm vorzugsweise bei ca. 1,5 mm liegen. Der Lochabstand der Perforationen kann den akustischen Verhältnissen angepaßt werden und liegt in der Regel im Bereich zwischen 0,5 und 3 cm, insbesondere zwischen 0,7 und 1,5 cm (Lochmitte zu Lochmitte).

Wie oben bereits erwähnt, kann der als Rückenbeschichtung vorgesehene Oberflächenbelag mit Vorteil als Schalldämpfung bzw. -dämmung ausgebildet sein. Aus diesem Grunde hat die Rückenbeschichtung mit Vorteil eine größere Materialstärke als die Dekorschicht. Die Rückenbeschichtung ist in der Regel vollflächig ausgebildet. Sie kann an Stellen, bei denen es auf eine besondere Schalldämpfung ankommt durch gesonderte Auflagen verstärkt sein. Dies ist mit Vorteil an den Stellen der Fall, wo größere Öffnungen in der Karosserieaußenfläche vorgesehen sind, die der heute üblichen Zwangsentlüftung eines Kraftfahrzeug-Innenraumes durch den Kofferraumbereich dienen.

Die Erfindung betrifft auch ein Verfahren zur Herstellung eines geformten Schichtkörpers mit einer Trägerschicht aus einer wesentlichen steifen extrudierten Folie aus Polypropylen und mindestens einem textilen Oberflächenbelag durch Verbinden und Formen bei erhöhter Temperatur. Dieses Verfahren ist dadurch gekennzeichnet, daß eine auf mindestens einer Seite vollflächig mit einer offenporigen Schicht aus einem dünnen als Trägerbahn dienenden Bahnmaterial belegte Folienbahn aus Polypropylen, die auf mindestens einer Oberfläche eine Temperatur im Klebrigkeitsbereich und im Innern eine niedrigere Temperatur im Bereich der plastischen Verformbarkeit des thermoplastischen Materials aufweist, mit mindestens einem textilen Oberflächenbelag aus einem im wesentlichen artgleichen thermoplastischen Kunststoff wie die Folie durch Verklebung verbunden wird, wobei das Temperaturniveau im Innern zum Verformen der Folie ausgenutzt wird.

Es wurde gefunden, daß eine für den textilen Oberflächenbelag besonders schonende und materialverträgliche Klebeverbindung erhalten wird, wenn nicht die gesamte Folie sondern nur deren mit dem textilen Oberflächenbelag zu verklebenden Oberflächenbereiche auf einem für die Klebeverbindung geeigneten Temperaturniveau liegen, wogegen der Folienkern und ggf. eine nicht zu beschichtende Oberfläche vorzugsweise auf einem tieferen Temperaturniveau liegen. Dadurch kann eine Überhitzung des Oberflächenbelages und damit eine ungewollte Schädigung des Belages vermieden werden. Gleicheitig wird erreicht, daß ein unerwünschtes Nachheizen von innen heraus unterbleibt und die Abkühldauer des Schichtkörpers in der Verformungseinrichtung relativ kurz ist. Hinzu kommt, daß die Folie aufgrund des niedrigeren Temperaturniveaus im Folienkern noch relativ stabil ist, so daß ungewollte Verformungen vor dem eigentlichen Formungsvorgang mit technisch einfachen Mitteln verhindert werden können.

Das Folieninnere bzw. der Folienkern befindet sich während des Verklebens der Oberfläche mit dem Oberflächenbelag vorzugsweise auf einem Temperaturniveau, das der Umformungstemperatur der thermoplastischen Materials entspricht.

Insbesondere bei thermoplastischen Kunststoffen mit einem kristallinen Anteil liegt die Umformungstemperatur beim Übergang vom kristallinen in den amorphen Bereich.

Die Temperaturabstufung kann dadurch erreicht werden, daß mindestens eine Oberfläche einer festen Folie, insbesondere Folienbahn aus einem thermoplastischen Polypropylen durch Oberflächenbeheizung derart auf eine Oberflächentemperatur im Klebrigkeitsbereich des thermoplastischen Kunststoffes gebracht wird, daß die Temperatur im Innern der Folie die für die plastische Verformung der Folie erforderliche Temperatur nicht überschreitet. Die Oberflächenbeheizung wird mit Vorteil durch die Infrarotstrahlung vorgenommen. Soll nur eine Seite der Folie mit dem Oberflächenbelag verbunden werden, dann erfolgt nur eine einseitige Beheizung. Vorzugsweise kann diese einseitige Beheizung mit einer gleichzeitigen Kühlung der anderen Seite kombiniert werden, wobei eine Kühlung mit kalten Gasen, insbesondere Kaltluft bevorzugt ist. Der thermoplastische Kunsstoff der Folie kann übliche Füllstoffe enthalten.

Erfindungsgemäß ist es auch möglich, eine Folie, die bereits mit einer Oberflächenschicht versehen ist, nachträglich auf der anderen Seite mit einer zweiten Oberflächenschicht zu verbinden, indem die für die Klebeverbindung vorgesehene Seite der beschichteten Folie aufgeheizt und die beschichtete Seite vorzugsweise gleichzeitig gekühlt wird.

Die zu verbindenden Oberflächenbeläge befinden sich beim Aufbringen mit besonderem Vorteil auf Raumtemperatur, d.h. sie werden ohne vorheriges Erhitzen auf die zu beschichtende Folie aufgebracht. Dies ist insbesondere dann von Vorteil, wenn die Oberflächenschicht vollständig aus dem gleichen Material besteht wie die Folie. Durch die kalte Zuführung der Oberflächenschicht, z.B. in Form eines Nadelvlieses, bleibt die Struktur dieser Oberflächenschicht erhalten.

Die Verbindung zwischen dem mindestens einen Oberflächenbelag und der Folie kann vor, während oder nach der Formung der Folie vorgenommen werden und wird zweckmäßigerweise spätestens während der Formung des Schichtkörpers vorgenommen. Bevorzugt ist eine mindestens teilweise oder vollständige Durchführung der Klebeverbindung, solange die einzelnen Schichten des Schichtkörpers der Formung noch nicht unterworfen sind. Die Verbindung wird vorzugsweise im Anschluß an das Aufheizen der Folie vorgenommen, indem die einzelnen Schichten unter mäßigem Druck zusammengeführt, beispielsweise gemeinsam durch ein Walzenpaar oder durch Klemmbalken hindurchgeführt werden. Eine vom eigentlichen Formungsvorgang getrennte Durchführung der Klebeverbindung erlaubt auch eine vom Formungsvorgang getrennte Regelung des Anpreßdruckes und eine unmittelbare Ausnutzung des Temperaturniveaus der Oberflächenschicht der aufgeheizten Folie für die Klebeverbindung, so daß eine vorsorgliche Erhitzung auf eine höhere Temperatur als erforderlich, vermieden werden kann.

Die eigentliche Formung in den dreidimensionalen Körper erfolgt mit Vorteil in an sich bekannter Weise unter Verwendung einer Zieh-Presse mit einer Matrize und einer Patrize, wobei der gesamte Formungsvorgang in einem Schritt durchgeführt wird. Dabei sind die Formen der Presse zweckmäßigerweise auf eine Temperatur unterhalb des Erstarrungsbereiches des thermoplastischen Kunststoffes der Folie temperiert. Der geformte Schichtkörper wird so lange zwischen den Formen gehalten, bis der Kunststoff der Folie so weit erstarrt, daß eine unerwünschte nachträgliche Verformung des Schichtkörpers nach dem Entformen vermieden wird. Vorzugsweise werden die Preßformen durch eine Sole auf eine Temperatur von minus 3° C temperiert, und die Oberflächentemperatur der Preßformen kann mit Vorteil im Bereich von +5° C liegen. Der Formungsvorgang zwischen den Preßformen wird diskontinuierlich, d.h. schrittweise vorgenommen. Die einzelnen Schichten, die zusammengeführt und gemeinsam zu dem Schichtkörper geformt werden, können von Vorratsrollen in entsprechender Weise schrittweise abgezogen werden, zumal auch das Aufheizen der Trägerfolie mit Vorteil schrittweise vorgenommen wird. Es ist aber auch möglich, die Kunststoffolie kontinuierlich aus einer Breitschlitzdüse eines Extruders zu formen, abkühlen zu lassen und dann die Folienbahn als Endlosbahn bis zur Formpresse zu leiten, wobei zwischen dem Extruder und der Aufheizzone vorzugsweise eine Warteschliefe o.dgl. eingelegt wird, um einen Ausgleich zwischen der kontinuierlichen Extrusion und dem schrittweisen Formungsvorgang zu erhalten.

Die Folie wird während des Aufheizvorganges auf einer Trägerbahn gehalten, die ein ungewolltes Verformen dar Trägerbahn im erwärmten Zustand verhindert. Es hat sich als besonders vorteilhaft erwiesen, diese Trägerbahn als sogenannten verlorenen Träger auszubilden, der als zusätzliche Schicht im geformten Schichtkörper verbleibt. Zu diesem Zweck ist die Trägerbahn vorzugsweise so ausgebildet, daß sie die erforderliche Zugfestigkeit aufweist, die benötigt wird, um ein ungewolltes Verformen der erweichten Folie aufgrund ihres Eigengewichtes zu verhindern, wobei die Zugfestigkeit der Trägerbahn andererseits so begrenzt ist, daß die dreidimensionale Verformung beim Ziehpressen nicht behindert wird, d.h. daß die Struktur der Trägerbahn beim Ziehpressen nachgibt und den Ziehweg der Folie beim Pressen mitmacht, ohne in diese einzuschneiden. Die Trägerbahn wird auf die Folie aufkaschiert, solange diese nach Verlassen der Breitschlitze des Extruders noch heiß genug ist, um eine Verankerung der Trägerbahn mit der Folie zu ermöglichen. Hierbei hat sich als vorteilhaft erwiesen, die Trägerbahn aus einem Material auszubilden, das bei dem Temperaturniveau auf dem sich das Folienmaterial nach Verlassen des Extruders befindet, stabil ist. Bei einem Folienmaterial aus Polypropylen beträgt die Austrittstemperatur ca. 240° C, wobei eine schnelle Abkühlung erfolgt. Eine Trägerbahn aus textilen Fasern ist besonders geeignet, wobei Polyesterfasern bevorzugt sind. Diese sind bei Erweichungstemperaturen von Polypropylen noch ausreichend stabil.

Die Trägerbahn weist vorzugsweise eine offene Struktur auf. Dies ist besonders dann von Vorteil, wenn die mit der Trägerbahn belegte Seite der Folie mit einem Oberflächenbelag versehen werden soll. Dabei ist die Porengröße bzw. die offene Struktur mit Vorteil so bemessen, daß die Ausbildung der Klebeverbindung zwischen den Fasern des Oberflächenmaterials und dem thermoplastischen Kunststoff der Folie durch die Poren der Trägerbahn hindurch ohne Behinderung möglich ist. Weiterhin ist die Trägerbahn in der Materialstärke vorzugsweise sehr dünn gehalten, was sich wiederum positiv auf die gute Verbindung zwischen Oberflächenbelag und Folie auswirkt. Als besonders geeignet für die Trägerbahn erweist sich ein Spinnvlies, d.h. ein Faservlies, bei dem die Fasern in der Ebene des Geleges liegen. Trägerbahnen mit einem Schichtgewicht von 10 - 50 g/m², insbesondere 20 - 40 g/m² sind besonders bevorzugt. Die Dicke der Trägerbahn liegt vorzugsweise in der Größenordnung vom 1 bis 5-fachen der Faserstärke.

Während des Aufheizvorganges wird die Folie vorzugsweise an ihren Längsrändern geführt bzw. gehalten. Dies kann beispielsweise in der Form erfolgen, daß die Längsränder eingespannt werden oder in Nadelketten eingehängt werden. Dabei wird die Trägerbahn jeweils miterfaßt. Demgegenüber sind die Oberflächenbeläge, die der heißen Folie zugeführt werden, vorzugsweise schmäler gehalten, so daß sie den Randbereich der Folie, der ohnehin beschnitten wird, nicht überdecken.

Soll die Folie Perforationen aufweisen, dann werden die entsprechenden Lochungen vorzugsweise vorgenommen, während sich die Folie in einem festen Zustand befindet, d.h. nachdem sie nach ihrer Herstellung durch Extrusion verfestigt ist und bevor die Aufheizung erfolgt ist. Die Lochung kann mit Perforations- oder Stachelwalzen vorgenommen werden. Die Lochung kann über den gesamten Flächenbereich der Folie vorgenommen oder, sofern erwünscht, auf z.B. akustisch bevorzugte Bereiche beschränkt werden. Befinden sich die Löcher in Bereichen, die beim Tiefziehvorgang gezogen werden, dann werden Löcher entsprechend deformiert, d.h. in der Regel in mindestens eine Richtung vergrößert. Dies wird bei der Bemessung der Lochgröße bei der Anbringung der Lochung an der kalten Folie entsprechend berücksichtigt.

Die Kunststoffolie hat im ungeformten Zustand mit Vorteil ein Flächengewicht bzw. Schichtgewicht im Bereich von 500 - 3000 g/m², insbesondere in Bereich von 900 - 1600 g/m². Eine textile Oberflächenschicht, die als Dekorschicht verwendet wird, hat in der Regel ein Flächengewicht im Bereich von 100 - 600 g/m², insbesondere 200 - 350 g/m². Eine Oberflächenschicht, die als Schalldämpfung auf der Rückseite verwendet wird hat vorzugsweise ein höheres Flächengewicht je nach gewünschter Schalldämpfung, wobei das Flächengewicht bis zu 1500 g/m² oder mehr betragen kann.

Für die Schalldämpfung werden mit Vorteil textile Nadelvliese verwendet, die aus Abfallfasern aus der Bekleidungsindustrie hergestellt sind, wobei zur vorzugsweisen Ausbildung der Klebeverbindung auch in der Dämpfungsschicht ein Mindestanteil an mit dem Folienmaterial verschmelzbaren Fasern vorgesehen ist.

Bei der Folie aus Polypropylen wird die Aufheizung vorzugsweise so gesteuert, daß die Folienoberfläche eine Oberflächentemperatur von ca. 180° C erreicht, wobei diese Temperatur mit einem Strahlungspyrometer gemessen ist. Bei dieser Oberflächentemperatur ist das Polypropylen ausreichend klebrig, um eine thermoplastische Verklebung mit den Fasern des Oberflächenbelages, die aus artgleichem oder gleichem Material bestehen, zu bilden. Die Kerntemperatur der Folie wird demgegenüber vorzugsweise im Bereich von 140 - 160° C gehalten. Dieser Temperaturbereich entspricht dem Umformungsbereich des Polypropylens mit plastischer Verformbarkeit, wobei noch ein Mindestmaß an Festigkeit erhalten bleibt. Dadurch, daß gemäß dem erfindungsgemäßen Verfahren eine Kerntemperatur im Verformungsbereich und eine Oberflächentemperatur im Klebrigkeitsbereich vorgesehen ist, kann eine gute Verklebung zwischen der Folie und der textilen Oberflächenschicht erhalten werden, wobei der Klebevorgang sich wegen der Begrenzung der Wäremenergie der Folie nicht nachteilig auf die Struktur des Oberflächenbelages auswirkt und andererseits die in der Folie vorhandene Wärmeenergie ausreicht, um sie gleichzeitig zur Herstellung des Schichtkörpers durch Verformung auszunutzen.

Die erfindungsgemäße Vorrichtung zur Herstellung des Innenauskleidungsteils für Kraftfahrzeuge weist eine Aufheizeinrichtung für die Folie, eine Zusammenführeinrichtung für das Zusammenführen von mindestens einem Oberflächenbelag und Folie sowie eine Formungseinrichtung auf. Diese Einrichtungen sind vorzugsweise entlang der Transportstrecke der Folie im wesentlichen unmittelbar hintereinander angeordnet. Sofern nur eine Seite der Folie mit einem Oberflächenbelag verschweißt werden soll, weist die Heizeinrichtung vorzugsweise eine Kühleinrichtung zum Abkühlen der anderen Seite der Folie auf.

Weitere Merkmale der Erfindung ergeben sich aus der nachfolgenden Beschreibung von bevorzugten Ausführungsformen in Verbindung mit der Zeichnung und den Unteransprüchen. Hierbei können die einzelnen Merkmale jeweils für sich alleine oder in Kombination miteinander bei einer Ausführungsform der Erfindung verwirklicht sein.

In der Zeichnung zeigen:
- Fig. 1: einen Teilquerschnitt durch einen Schichtkörper nach der Erfindung;
- Fig. 2.: eine schematische Darstellung der Verfahrensweise und der Vorrichtung zur Herstellung des Schichtkörpers und
- Fig. 3: eine andere Ausführungsform der Verfahrensweise und Vorrichtung zur Herstellung des Schichtkörpers.

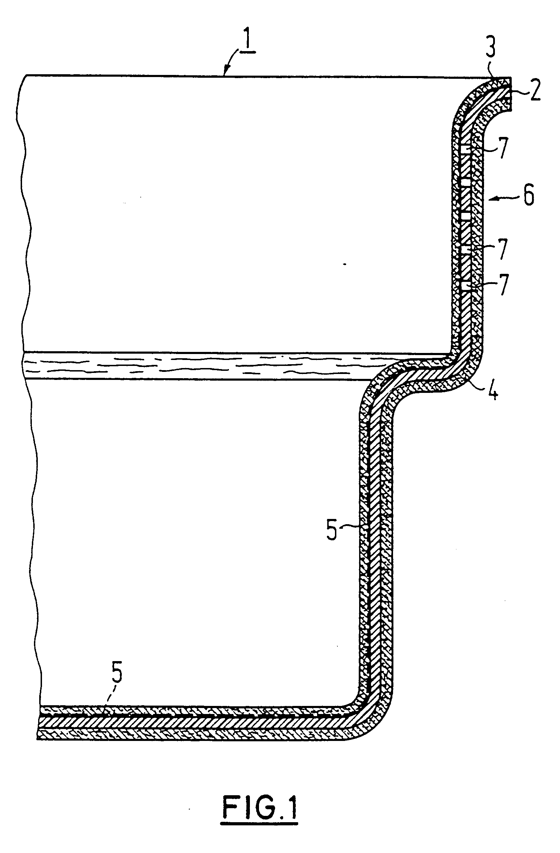

Bei der in Fig. 1 dargestellten Ausführungsform der Erfindung ist eine als Schichtkörper 1 ausgebildete Kofferraum-Innenauskleidung vorgesehen, die aus drei Schichten aufgebaut ist. Eine Trägerschicht 2 aus einer Polypropylenfolie ist durch thermische Verformung,aus einem flächigem Material herausgeformt und vorhandenen Formen eines Kofferraumes angepaßt, wodurch ein dreidimensionaler Schichtkörper gebildet ist. Die Trägerschicht 2 ist an beiden Seiten mit einem textilen Nadelvlies als Oberflächenbelag beschichtet. Ein Oberflächenbelag 3 ist als Dekorschicht ausgebildet wogegen ein auf der nicht sichtbaren Seite der Kofferraum-Innenauskleidung vorgesehener Oberflächenbelag als Rückenschicht 4 ausgebildet ist, die zur Schalldämpfung dient. Zwischen der Dekorschicht 3 und der Trägerschicht 2 befindet sich noch eine sehr dünne, Durchbrechungen aufweisende Zwischenschicht 5 die von einer verlorenen Trägerbahn gebildet wird. Sowohl die Dekorschicht 3 als auch die Rückenschicht 4 bestehen aus einem Nadelvlies aus Polypropylenfasern. Das Schichtgewicht des Nadelvlieses der Dekorschicht beträgt ca. 350 g/m², wogegen das Schichtgewicht des Rückenvlieses etwa doppelt so hoch ist. Die beiden Nadelvliese sind mit der Polypropylenfolie durch thermische Verklebung verbunden. Dies bedeutet, daß einzelne Fasern oder Faserkonglomerate, die an der der Folie zugewandten Seite der Nadelvliese liegen, mit der Folienoberfläche versintert sind. Dadurch liegt eine gute Verbindung zwischen den drei Schichten vor, ohne daß ein zusätzlicher Kleber verwendet wurde. Die Zwischenschicht 5 besteht aus einem Polyestervlies in Form eines sehr dünnen und leichten Fasergeleges mit einem Schichtgewicht von 30 g/m². Dieses Fasergelege ist sehr dünn und hat, abgesehen von seinen relativ großen Öffnungen eine Materialstärke vom 1 bis ca. 5-fachen der Faserstärke. Der Loch- bzw. Porenanteil des Fasergeleges liegt bei ca. 90 % und mehr. Die Polypropylenfolie selbst hat an nicht verformten Bereichen ein Schichtgewicht von ca. 1600 g/m². An solchen Stellen, die bei der Verformung gezogen sind, ist es entsprechend geringer.

Der dargestellte Schichtkörper ist somit im wesentlichen sortenrein aufgebaut. Der geringe Anteil an Polyesterfasern, der durch die Trägerbahn 5 eingebracht ist spielt bei der Wiederaufarbeitung des Schichtkörpers keine Rolle und ist vernachlässigbar, zumal die Polyesterfasern sehr dünn sind und bei einem etwaigen Pelletisieren des Schichtkörpers beim Recycling ohnehin zerkleinert werden.

Der sortenreine Aufbau ist besonders von Vorteil, wenn bei der Herstellung des Schichtkörpers viel Verschnitt anfällt, wie dies bei einer Kofferraum-Innenauskleidung der Fall ist. Wegen der komplizierten Formen solcher Kofferraum-Innenauskleidungen kann der Verschnitt bis zu 50 % betragen. Der Verschnitt kann problemlos zur Herstellung von Trägerfolie eingesetzt werden.

Die Trägerschicht 2 besitzt im Seitenwandbereich 6 der Kofferraum-Innenauskleidung Perforationen 7. Die Löcher der Perforationen haben dabei einen Durchmesser von ca. 1 - 2 mm und befinden sich in Abständen von 0,5 - 2 cm voneinander, wobei die Löcher in den Bereichen, in denen die Polypropylenfolie gezogen ist, abweichend von der ursprünglichen Kreisform entsprechend deformiert und vergrößert sind. Die Zwischenschicht 5 ist in den gezogenen Bereichen der Folie desintegriert. D.h. der Faserverbund ist in diesen Bereichen teilweis oder vollstänig aufgelöst. Die Nadelvliese der Dekorschicht 3 und der Rückenschicht 4 haben die Verformung der Trägerfolie vollständig mitgemacht und sind an den Stellen, an denen die Folie gezogen bzw. gedehnt ist, in entsprechender Weise gedehnt, ohne daß dies an der Oberfläche sichtbar ist. Die in der Trägerschicht vorgesehenen Perforationen sind von der Dekorschicht überdeckt und nicht sichtbar. In den Kofferraum eingedrungener Luftschall kann durch die Löcher der Perforationen 7 in dahintergelegene abgedeckte Räume des Kofferraumes eindringen und läuft sich in diesen Räumen tot. Dadurch wird eine wirkungsvolle Schallabsorption erzielt. Entsprechend dient die Rückenschicht 4 hauptsächlich zur Schalldämpfung. Die Trägerschicht verhindert an den unperforierten Stellen, daß Schall, der durch Öffnungen in der Karosserie, z.B. an Stellen der Zwangsentlüftung, von außen in das Fahrzeuginnere eindringt, durch die Kofferraum-Innenauskleidung in das Innere des Kofferraumes eindringen kann.

Es ist auch möglich, in einzelne Oberflächenschichten nur einen Anteil an mit dem Folienmaterial verklebbarem Fasermaterial vorzusehen oder auch nur eine Oberflächenschicht mit der Trägerfolie durch thermische Verklebung zu verbinden. Vorzugsweise wird der Anteil an Fremdfasern jedoch so gering gehalten, daß eine Wiederverwertung des gesamten Schichtkörpers durch thermoplastische Verarbeitung möglich bleibt.

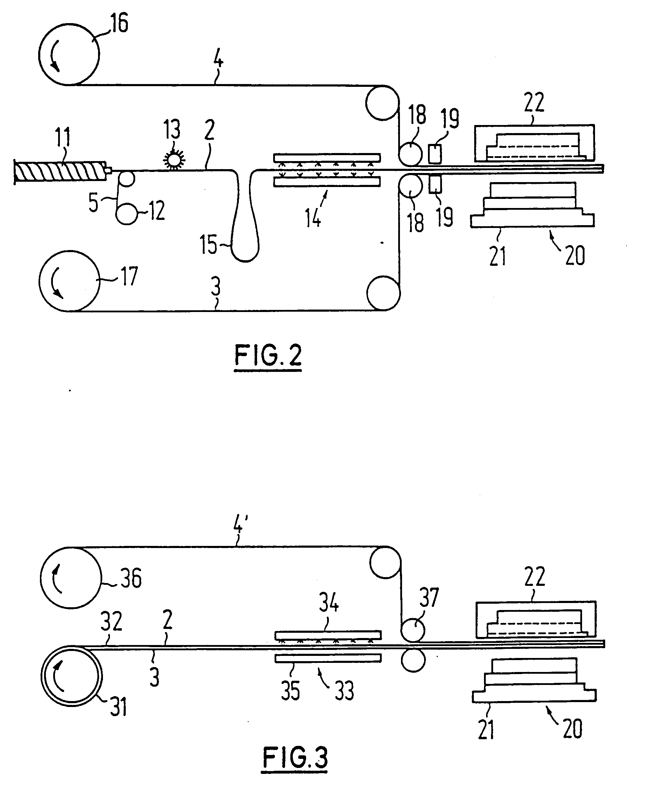

Fig. 2 zeigt in schematischer Darstellung eine Einrichtung zur Herstellung des erfindungsgemäßen Schichtkörpers und die damit verbundene Arbeitsweise. Die Trägerschicht 2 wird aus einem Extruder 11 als Endlosbahn extrudiert und tritt aus einer nicht dargestellten Breitschlitzdüse des Extruders als plastische leicht verformbare Polypropylenendlosbahn aus. Dieser Bahn wird von unten von einer Vorratsrolle 12 ein bahnförmiges Fasergelege zugeführt, das die Trägerbahn bzw. die Zwischenschicht 5 bildet. Beim Zusammenführen der Trägerbahn mit der noch heißen Polypropylenbahn werden die Polyesterfasern der Trägerbahn mit dem weichen Polypropylen teilweise in dieses eingebettet. Dadurch wird eine gute Verbindung zwischen der Trägerbahn und der Polypropylenfolie erhalten, wobei die Fasern der Trägerbahn in Folge der Temperaturstabilität der Polyesterfasern nicht verändert werden. Die so hergestellte mit der Trägerbahn 5 verbundene Polypropylenfolie 2 kann nach dem Abkühlen und Verfestigen aufgerollt und zwischengelagert werden. Die Rolle kann dann bei der Weiterverarbeitung als Vorratsrolle dienen. Es ist aber auch möglich, die Trägerbahn unmittelbar der Verarbeitung zuzuführen, wie dies in Fig. 2 dargestellt ist. Dort wird die abgekühlte Trägerbahn zunächst mit Hilfe einer Perforationswalze 13 mit einer Lochung versehen, die gleichzeitig eine Randlochung zum Festhalten der Bahn in einer nachfolgenden Heizeinrichtung 14 umfassen kann. Vor der Heizeinrichtung 14 ist die Bahn der Trägerschicht zweckmäßigerweise in eine Ausgleichsschlaufe 15 gelegt, die zum Ausgleich des Übergangs von der kontinuierlichen Extrusion zur diskontinuierlichen Aufheizung und Formung bietet.

Die Heizeinrichtung 14 arbeitet mit Infrarotstrahlern und ist bei der dargestellten Ausführungsform zur beidseitigen Oberflächenbeheizung ausgerüstet. In der Heizeinrichtung wird ein Bahnabschnitt aufgeheizt, der im wesentlichen der Größe eines für die Herstellung einer Kofferraum-Innenauskleidung dienenden Abschnittes entspricht. Die Oberflächenbeläge, nämlich die Dekorschicht 3 und die Rückenschicht 4 werden von Vorratsrollen 17 bzw. 16 abgezogen und gleichzeitig beidseitig mit der aufgeheizten Trägerschicht vereinigt. Die Vereinigung und die Verbindung erfolgt vorzugsweise über Umlenkrollen 18, die gleichzeitig als Anpreßwalzen dienen. Hierzu können auch zusätzliche Klemmbacken 19 vorgesehen sein. Durch die Beheizung werden die Oberflächen der Trägerschicht 2 stärker aufgeheizt als das Folieninnere. Nach Beendigung der Aufheizung ist die Folienoberfläche soweit erweicht, daß sie eine thermische Verklebung mit den Polypropylenfasern der Dekorschicht 3 und der Rückenschicht 4 einzugehen vermag. Dabei ist der Folienkern noch so fest, daß er den zur Verbindung der drei Schichten vorgesehenen Auspreßdruck auszuhalten vermag. Gleichzeitig ist der Folienkern aber so stark erhitzt, daß seine Temperatur im Umformungsbereich von Polypropylen liegt, so daß die Umformung des noch flachen Schichtkörpers unmittelbar im Anschluß der Vereinigung der drei Schichten in einer Ziehpresse 20 erfolgen kann. Diese weist eine Patrize 21 und eine Matrize 22 auf, die ständig temperiert, insbesondere gekühlt sind. Die Kühlung bewirkt einen Schutz der Nadelvliese der Oberflächenschichten und gleichzeitig eine Verfestigung der Trägerschicht, nachdem der flache Schichtkörper zu einem dreidimensionalen Schichtkörper umgeformt ist. Ein Randbeschnitt des fertigen Schichtkörpers kann gleichzeitig mit dem Ziehpressen oder danach vorgenommen werden.

Bei der in Fig. 3 dargestellten Ausführungsform ist eine Vorratsrolle 31 vorgesehen, auf der sich ein Vorrat an Polypropylenfolie befindet, die bereits mit einem Oberflächenbelag 3 aus einem Dekorvlies und einer Trägerbahn verbunden ist, die später die Zwischenschicht 5 bildet. Diese Trägerbahn befindet sich zwischen der Bahn der Trägerschicht 2 und der Bahn der Dekorschicht 3. Dieser vorgebildete Schichtkörper 32 wird schrittweise einer Heiz/Kühleinrichtung 33 zugeführt, die an ihrer Oberseite eine Infrarotheizeinrichtung 34 zum Erhitzen der freiliegenden Oberfläche der Trägerschicht aufweist und an ihrer Unterseite eine Kühleinrichtung 35 zum gleichzeitigen Abkühlen der auf der anderen Seite befindlichen Dekorschicht 3. Die Beheizung erfolgt wiederum in der Weise, daß die für die Klebeverbindung vorgesehene Oberfläche der Trägerschicht auf eine Temperatur im Bereich von ca. 180° C gebracht wird, wogegen der Folienkern und die andere Seite der Trägerschicht eine im Umformungsbereich liegende Temperatur von 140 - 160° C nicht übersteigt. Eine Rückenschicht 4' wird als Bahnmaterial von einer Vorratsrolle 36 abgezogen, und diese Rückenschicht ist ein Nadelvlies, das vollständig aus Polypropylenfasern oder aus Fremdfasern und einem zur Ausbildung der Klebeverbindung ausreichenden Mindestanteil an Polypropylenfasern besteht. Die Verbindung der Rückenschicht 4 mit dem vorgebildeten Schichtkörper 32 erfolgt ähnlich wie bei der Ausführungsform nach Fig. 2 über ein Walzenpaar 37. Auch die Formung des noch flachen Verbundkörpers zu einem dreidimensionalen Schichtkörper erfolgt mittels einer Ziehpresse 20 mit Patrize 21 und Matrize 22.

## Patentansprüche

1. Innenauskleidungsteil für Kraftfahrzeuge in Form eines geformten Schichtkörpers (1), mit einer Trägerschicht (2) aus einer im wesentlichen steifen extrudierten Folie aus Polypropylen und mindestens einem Oberflächenbelag (3, 4) aus einem textilen Flächengebilde, dadurch gekennzeichnet, daß Fasern von mindestens einem Oberflächenbelag (3, 4) mindestens teilweise aus einem im wesentlichen artgleichen thermoplastischen Kunststoff bestehen wie die Folie (2) und der Oberflächenbelag (3, 4) durch thermische Verklebung dieser Fasern mit der Folie (2) verbunden ist, und daß mindestens eine Seite der Folie vollflächig mit einer offenporigen Schicht (5) aus einem dünnen als Trägerbahn dienenden Bahnmaterial belegt ist, das der Folie (2) und dem mindestens einen textilen Oberflächenbelag (3, 4) entsprechend geformt ist.

2. Innenauskleidungsteil nach Anspruch 1, dadurch gekennzeichnet, daß zwei textile Oberflächenbeläge (3 und 4) vorgesehen sind, die vorzugsweise beide durch thermische Verklebung mit der Folie verbunden sind.

3. Innenauskleidungsteil nach Anspruch 1 oder 2, dadurch gekennzeichnet, daß mindestens ein Oberflächenbelag (3, 4), insbesondere eine Dekorschicht (3), aus im wesentlichen dem gleichen Material wie die Folie, insbesondere aus Polypropylen, besteht.

4. Innenauskleidungsteil nach einem der vorhergehenden Ansprüche, dadurch gekennzeichnet, daß er aus in bezug auf Recycling miteinander verträglichen Materialien besteht.

5. Innenauskleidungsteil nach einem der vorhergehenden Ansprüche, dadurch gekennzeichnet, daß die Folie (2) und mindestens ein Oberflächenbelag (3, 4) aus thermoplastischen Polymeren besteht, die beim Aufschmelzen der Folie, insbesondere bei einer Wiederaufarbeitung, eine gemeinsame Schmelze zu bilden vermögen.

6. Innenauskleidungsteil nach einem der vorhergehenden Ansprüche, dadurch gekennzeichnet, daß er im wesentlichen sortenrein aufgebaut ist.

7. Innenauskleidungsteil nach einem der Ansprüche 1 bis 5, dadurch gekennzeichnet, daß mindesten ein Oberflächenbelag (4'), insbesondere eine Rückenschicht, mindestens zum Teil, vorzugsweise zum überwiegenden Anteil, aus Fasern besteht, die mit dem Material der Folie (2) nicht verschmelzbar sind, wobei der Oberflächenbelag (4') einen zur thermischen Verklebung ausreichenden Anteil an Fasern aus einem artgleichen Material wie die Folie aufweist, wobei die zur thermischen Verklebung mit der Folie (2) geeigneten Fasern vorzugsweise in der der Folie zugewandten Oberflächenseite des Oberflächenbelages angereichert sind.

8. Innenauskleidungsteil nach einem der vorhergehenden Ansprüche, dadurch gekennzeichent, daß die Schicht (5) aus dem Bahnmaterial zwischen dem Oberflächenbelag (3), insbesondere einer Rückenschicht, und der Folie (2) angeordnet ist und vorzugsweise so dünn ist und die Porenweite so groß ist, daß die Klebeverbindung zwischen Folie (2) und Oberflächenbelag (3) die Poren der Schicht (5) durchdringt.

9. Innenauskleidungsteil nach einem der vorhergehenden Ansprüche, dadurch gekennzeichnet, daß das Bahnmaterial (5) von einer verlorenen Trägerbahn gebildet wird, die im Schichtkörper (1) verbleibt.

10. Innenauskleidungsteil nach einem der vorhergehenden Ansprüche, dadurch gekennzeichnet, daß die Folie (2) mindestens an Flächenbereichen Perforationen (7) aufweist, wobei vorzugsweise mindestens ein Oberflächenbelag (3, 4) frei von Perforationen ist und die Perforationen (7) der Folie (2) überdeckt.

11. Innenauskleidungsteil nach Anspruch 10, dadurch gekennzeichnet, daß die Perforationen (7) in Abhängigkeit von der Verformung der Folie (2) deformiert sind.

12. Innenauskleidungsteil nach einem der Ansprüche 10 oder 11, dadurch gekennzeichet, daß die Perforationen (7) an solchen Bereichen der Folie (2) vorgesehen sind, die zur Schallabsorption geeignete Hohlräume abdecken.

13. Verfahren zur Herstellung eines Innenauskleidungsteiles für Kraftfahrzeuge in Form eines geformten Schichtkörpers mit einer Trägerschicht aus einer im wesentlichen steifen extrudierten Folie aus Polypropylen und mindestens einem Oberflächenbelag aus einem textilen Flächengebilde durch Verbinden und Formen bei erhöhter Temperatur, insbesondere nach einem der vorhergehenden Ansprüche, dadurch gekennzeichnet, daß eine auf mindestens einer Seite vollflächig mit einer offenporigen Schicht aus einem dünnen als Trägerbahn dienenden Bahnmaterial belegte Folienbahn aus Polypropylen, die auf mindestens einer Oberfläche eine Temperatur im Klebrigkeitsbereich und im Innern eine niedrigere Temperatur im Bereich der plastischen Verformbarkeit des thermoplastischen Materials aufweist, mit mindestens einem textilen Oberflächenbelag aus einem im wesentlichen artgleichen thermoplastischen Kunststoff wie die Folie durch Verklebung verbunden wird, wobei das Temperaturniveau im Innern zum Verformen der Folie ausgenutzt wird.

14. Verfahren nach Anspruch 13, dadurch gekennzeichnet, daß mindestens eine Oberfläche einer festen Folienbahn, aus Polypropylen durch Oberflächenbeheizung derart auf eine Oberflächentemperatur im Klebrigkeitsbereich des Polypropylens gebracht wird, daß die Temperatur im Innern der Folie die für die plastische Verformung der Folie erforderliche Temperatur im wesentlichen nicht überschreitet.

15. Verfahren nach Anspruch 13 oder 14, dadurch gekennzeichnet, daß als Oberflächenbelag ein textiles Flächengebilde, insbesondere ein Nadelvlies, verwendet wird, dessen Fasern mindesten zum Teil aus einem artgleichen Kunststoff bestehen wie die Folie, wobei der Schmelzbereich der Kunststoffe im wesentlichen der gleiche ist.

16. Verfahren nach einem der Ansprüche 13 bis 15, dadurch gekennzeichnet, daß die Folie aus Polypropylen mindestens einseitig auf eine Oberflächentemperatur von ca. 180° C aufgeheizt wird und vorzugsweise die Aufheizung der Folienoberfläche derartig gesteuert wird, daß der Folienkern eine Temperatur im Bereich von 140 - 160° C nicht überschreitet.

17. Verfahren nach einem der Ansprüche 13 bis 16, dadurch gekennzeichnet, daß die Folienbahn nur einseitig beheizt wird, wobei vorzugsweise die nichtbeheizte andere Seite gleichzeitig gekühlt wird.

18. Verfahren nach einem der Ansprüche 13 bis 17, dadurch gekennzeichnet, daß der mindestens ein Oberflächenbelag ohne Vorwärmung, insbesondere im wesentlichen bei Umgebungstemperatur der erhitzten Oberseite der Folie, zugeführt wird.

19. Verfahren nach einem der Ansprüche 13 bis 18, dadurch gekennzeichnet, daß die Folie vor dem Erhitzen mindestens bereichsweise perforiert, insbesondere gelocht wird.

20. Verfahren nach einem der Ansprüche 13 bis 19, dadurch gekennzeichnet, daß die Perforationen in Abhängigkeit vom Materialfluß der Folie beim Formen in ihrer Gestalt verändert, insbesondere aufgeweitet werden und dies bei der Perforierung vorzugsweise berücksichtigt wird.

21. Vorrichtung zur Durchführung des Verfahrens nach einem der Ansprüche 13 bis 20, gekennzeichnet durch eine Heizeinrichtung (14, 34) zur Erwärmung mindestens einer Oberfläche einer Folie, eine Zusammenführeinrichtung (18, 19; 37) zum Zusammenführen der erhitzten Folie mit mindestens einem textilen Oberflächenbelag und eine Formungseinrichtung (19, 20) zum Umformen der beschichteten Folie zu einem dreidimensionalen Körper.

## Claims

1. Internal lining part for motor vehicles in the form of a shaped laminate (1), with a support layer (2) formed from a substantially stiff, extruded sheet of polypropylene and at least one surface layer (3, 4) of a textile fabric, characterized in that fibres of at least one surface layer (3, 4) at least partly comprise a thermoplastic material of substantially the same type as the sheet (2) and the surface layer (3, 4) is joined to the sheet (2) by thermal bonding of said fibres, and that at least one side of the sheet is covered in full surface manner with an open-pore layer (5) of a thin web material serving as a support web, shaped in accordance with the sheet (2) and the at least one textile surface layer (3, 4).

2. Internal lining part according to claim 1, characterized in that two textile surface layers (3, 4) are provided, both of which are preferably joined by thermal bonding to the sheet.

3. Internal lining part according to claim 1 or 2, characterized in that at least one surface layer (3, 4), particularly a decorative layer (3), is made from substantially the same material as the sheet and in particular from polypropylene.

4. Internal lining part according to one of the preceding claims, characterized in that it is made from materials compatible with one another with respect to recycling.

5. Internal lining part according to one of the preceding claims, characterized in that the sheet (2) and at least one surface layer (3, 4) are made from thermoplastic polymers, which on melting the sheet, particularly during reprocessing, are able to form a common melt.

6. Internal lining part according to one of the preceding claims, characterized in that it has a substantially type-pure structure.

7. Internal lining part according to one of the claims 1 to 5, characterized in that at least one surface layer (4'), particularly a backing, is at least partly and preferably mainly made from fibres, which are not fusible with the material of the sheet (2), the surface layer (4') having a proportion of fibres made from the same type of material as the sheet adequate for thermal bonding, the fibres suitable for thermal bonding to the sheet (2) preferably being present in larger numbers in the side of the surface layer facing the sheet.

8. Internal lining part according to one of the preceding claims, characterized in that the layer (5) of the web material is placed between the surface layer (3), particularly a backing, and the sheet (2) and is preferably so thin and the pore width so large that the adhesive bond between the sheet (2) and surface layer (3) penetrates the pores of the layer (5).

9. Internal lining part according to one of the preceding claims, characterized in that the web material (5) is formed by a hidden supporting web, which remains in the laminate (1).

10. Internal lining part according to one of the preceding claims, characterized in that the sheet (2) has, at least on surface areas, perforations (7) and preferably at least one surface layer (3, 4) is free from perforations and covers the perforations (7) of the sheet (2).

11. Internal lining part according to claim 10, characterized in that the perforations (7) are deformed as a function of the deformation of the sheet (2).

12. Internal lining part according to one of the claims 10 or 11, characterized in that the perforations (7) are provided on those areas of the sheet (2), which cover cavities suitable for sound absorption.

13. Process for the production of an internal lining part for motor vehicles in the form of a shaped laminate with a support layer of a substantially stiff, extruded polypropylene sheet and at least one surface layer of a textile fabric by joining and shaping at elevated temperature, particularly according to one of the preceding claims, characterized in that a polypropylene sheet web having on at least one surface a temperature in the tackiness range and in the interior a lower temperature in the range of the plastic deformability of the thermoplastic material is covered on at least one side in full surface manner with an open-pore layer of a thin web material serving as a support web, is joined to at least one textile surface layer of substantially the same thermoplastic material as the sheet by bonding, the temperature level in the interior being utilized for deforming the sheet.

14. Process according to claim 13, characterized in that at least one surface of a firm sheet web of polypropylene is brought by surface heating to a surface temperature in the tackiness range of the polypropylene in such a way that the temperature in the interior of the sheet does not significantly exceed the temperature necessary for the plastic deformation of the sheet.

15. Process according to claim 13 or 14, characterized in that as the surface layer use is made of a textile fabric, particularly a needle web, whose fibres are at least partly formed from a similar type of plastic to the sheet, the melting range of the plastics being substantially the same.

16. Process according to one of the claims 13 to 15, characterized in that the polypropylene sheet is heated on at least one side to a surface temperature of approximately 180°C and preferably the heating of the sheet surface is so controlled that the sheet core does not exceed a temperature in the range 140 to 160°C.

17. Process according to one of the claims 13 to 16, characterized in that only one side of the sheet web is heated and preferably the unused, other side is simultaneously cooled.

18. Process according to one of the claims 13 to 17, characterized in that the at least one surface layer, without preheating, particularly substantially at ambient temperature, is supplied to the heated top of the sheet.

19. Process according to one of the claims 13 to 18, characterized in that, prior to heating, the sheet is in particular zonally perforated and in particular holes are made.

20. Process according to one of the claims 13 to 19, characterized in that the perforations undergo a shape change and are in particular widened, as a function of the material flow of the sheet during shaping and this is preferably taken into account when making the perforations.

21. Apparatus for performing the process according to one of the claims 13 to 20, characterized by a heating device (14, 34) for heating at least one surface of the sheet, a device (18, 19; 37) for bringing together the heated sheet and at least one textile surface layer and a shaping device (19, 20) for shaping the coated sheet to a three-dimensional body.

## Revendications

1. Pièce d'habillage intérieur pour véhicules à moteur, qui présente la forme d'un corps stratifié moulé (1) comportant une couche porteuse (2) constituée d'une feuille en polypropylène extrudé, essentiellement rigide, et au moins un revêtement de surface (3, 4) constitué d'un produit textile plat, caractérisée en ce que les fibres d'au moins un revêtement de surface (3, 4) sont au moins en partie constituées d'un matériau synthétique thermoplastique de même nature que celui de la feuille (2), et le revêtement de surface (3, 4) est lié à la feuille (2) par collage thermique de ces fibres, et en ce qu'au moins une face de la feuille est recouverte sur toute sa surface d'une couche (5) à pores ouverts constituée d'un matériau en bande mince servant de feuille porteuse, qui est moulé en correspondance à la feuille (2) et au revêtement textile de surface (3, 4) au moins présent.

2. Pièce d'habillage intérieur selon la revendication 1, caractérisée en ce qu'il est prévu deux revêtements textiles de surface (3 et 4) qui sont de préférence tous deux reliés à la feuille par collage thermique.

3. Pièce d'habillage intérieur selon les revendications 1 ou 2, caractérisée en ce qu'au moins un revêtement de surface (3, 4), en particulier une couche de décoration (3), est essentiellement constitué du même matériau que la feuille, et en particulier de polypropylène.

4. Pièce d'habillage intérieur selon l'une des revendications précédentes, caractérisée en ce qu'elle est constituée de matériaux compatibles sur le plan du recyclage.

5. Pièce d'habillage intérieur selon l'une des revendications précédentes, caractérisée en ce que la feuille (2) et au moins un revêtement de surface (3, 4) sont constitués de polymères thermoplastiques qui, lors de la mise en fusion de la feuille, en particulier lors d'un retraitement, sont aptes à former un bain de fusion commun.

6. Pièce d'habillage intérieur selon l'une des revendications précédentes, caractérisée en ce qu'elle est essentiellement constituée d'un seul matériau.

7. Pièce d'habillage intérieur selon l'une des revendications 1 à 5, caractérisée en ce qu'au moins un revêtement de surface (4'), en particulier une couche de dos, est au moins en partie, et de préférence pour sa majeure partie, constitué de fibres qui ne peuvent fondre avec le matériau de la feuille (2), le revêtement de surface (4') présentant une teneur en fibres qui est suffisante pour permettre le collage thermique, les fibres étant constituées d'un matériau de même nature que celui de la feuille, la face du revêtement de surface qui est tournée vers la feuille étant de préférence enrichie en fibres convenant pour le collage thermique avec la feuille (2).

8. Pièce d'habillage intérieur selon l'une des revendications précédentes, caractérisée en ce que la couche (5) en le matériau en bande est disposée entre le revêtement de surface (3), en particulier une couche de dos, et la feuille (2), et est de préférence d'une minceur telle et les pores sont d'une taille telle que la liaison par collage entre la feuille (2) et le revêtement de surface (3) traverse les pores de la couche (5).

9. Pièce d'habillage intérieur selon l'une des revendications précédentes, caractérisée en ce que le matériau plat (5) est formé d'une bande porteuse perdue qui reste dans le corps stratifié (1).

10. Pièce d'habillage intérieur selon l'une des revendications précédentes, caractérisée en ce que la feuille (2) présente des perforations (7) au moins sur des parties de sa surface, et de préférence au moins un revêtement de surface (3, 4) est dépourvu de perforations et recouvre les perforations (7) de la feuille (2).

11. Pièce d'habillage intérieur selon la revendication 10, caractérisée en ce que les perforations (7) sont déformées en correspondance avec le formage de la feuille (2).

12. Pièce d'habillage intérieur selon l'une des revendications 10 ou 11, caractérisée en ce que les perforations (7) sont prévues dans les régions de la feuille (2) qui recouvrent des espaces convenant pour l'absorption des bruits.

13. Procédé pour la fabrication d'une pièce d'habillage intérieur pour véhicules à moteur, qui présente la forme d'un corps stratifié moulé comportant une couche porteuse constituée d'une feuille en polypropylène extrudé essentiellement rigide et au moins un revêtement de surface en un produit textile plat, par assemblage et formage à température élevée, en particulier selon l'une des revendications précédentes, caractérisé en ce qu'une feuille continue en polypropylène, qui présente sur au moins une face une température située dans la plage de collage et à l'intérieur une température plus basse, située dans la plage de la déformation plastique du matériau thermoplastique, est revêtue, sur toute la surface d'au moins une face, d'une couche à pores ouverts constituée d'un matériau en bande mince servant de bande porteuse, et est reliée par collage à au moins un revêtement textile de surface constitué d'un matériau thermoplastique essentiellement de même nature que celui de la feuille, le niveau de température à l'intérieur étant utilisé pour le formage de la feuille.

14. Procédé selon la revendication 13, caractérisé en ce qu'au moins une surface d'une feuille continue rigide en polypropylène est amenée par chauffage en surface à une température de surface située dans la plage de collage du polypropylène, de telle sorte que la température à l'intérieur de la feuille ne dépasse pas essentiellement la température nécessaire pour la déformation plastique de la feuille.

15. Procédé selon les revendications 13 ou 14, caractérisé en ce que comme revêtement de surface, on utilise un produit textile plat, en particulier un feutre aiguilleté, dont au moins une partie des fibres est constituée d'un matériau synthétique de même nature que celui de la feuille, la plage de fusion des matériaux synthétiques étant essentiellement la même.

16. Procédé selon l'une des revendications 13 à 15, caractérisé en ce que la feuille de polypropylène est chauffée au moins d'un côté à une température de surface d'environ 180° C et le chauffage de la surface de la feuille est de préférence commandé de telle sorte que le coeur de la feuille ne dépasse pas une température comprise dans la plage de 140 à 160° C.

17. Procédé selon l'une des revendications 13 à 16, caractérisé en ce que la feuille continue n'est chauffée que d'un côté, et l'autre côté non chauffé est de préférence en même temps refroidi.

18. Procédé selon l'une des revendications 13 à 17, caractérisé en ce que le revêtement de surface au moins présent est amené sur la surface chauffée de la feuille sans préchauffage, et en particulier essentiellement à la température ambiante.

19. Procédé selon l'une des revendications 13 à 18, caractérisé en ce qu'avant le chauffage, la feuille est perforée et en particulier traversée par des trous, au moins par zones.

20. Procédé selon l'une des revendications 13 à 19, caractérisé en ce que la forme des perforations se modifie en fonction de l'écoulement du matériau de la feuille lors de son formage, et en particulier s'élargit, et il en est de préférence tenu compte lors de la perforation.

21. Dispositif en vue de l'exécution du procédé selon l'une des revendications 13 à 20, caractérisé par un dispositif de chauffage (14, 34) pour le réchauffage d'au moins une surface d'une feuille, un dispositif d'assemblage (18, 19; 37) pour l'assemblage de la feuille chauffée avec au moins un revêtement textile de surface, et un dispositif de moulage (19, 20) pour mouler en un corps tridimensionnel la feuille revêtue.
